# EUROPÄISCHE PATENTSCHRIFT

(11) **EP 0 399 480 B1**
(45) Veröffentlichungstag und Bekanntmachung des Hinweises auf die Patenterteilung: **19.01.1994**
(21) Anmeldenummer: 90109731.1
(22) Anmeldetag: 22.05.1990
(51) Int. Cl.: F16B 39/284, F16B 39/28

(54) **Ganzstahl-Sicherungsmutter**
All-steel locknut
Ecrou tout-acier de blocage

(30) Priorität: 26.05.1989 DE 3917193
(43) Veröffentlichungstag der Anmeldung: 28.11.1990
(73) Patentinhaber: Flaig, Hartmut, D-78554 Aldingen (DE)
(72) Erfinder: Flaig, Hartmut, D-78554 Aldingen (DE)
(74) Vertreter: Liesegang, Roland, Dr.-Ing.

(56) Entgegenhaltungen:
- DD-A- 257 668
- DE-A- 2 237 514
- DE-C- 2 638 560

## Beschreibung

Die Erfindung betrifft eine Ganzstahl-Sicherungsmutter mit einem elastisch federnden Schlitz.

Sicherungsmuttern sind in vielen unterschiedlichen Ausführungen bekannt und auf dem Markt. Insbesondere in den letzten Jahren sind nun die Anforderungen an die Sicherungsmuttern beträchtlich gestiegen. Die Sicherungsmuttern sollen eine hohe Klemmsicherung gewährleisten, eine große Zahl von Wiederholungen des Klemmvorgangs erlauben, gegenüber Temperatureinflüssen, insbesondere auch hohen Temperaturen, widerstandsfähig sein und schließlich trotzdem einfach und kostengünstig herstellbar und bei automatisierten Schraubvorgängen einsetzbar sein. Die meisten der bekannten Sicherungsmuttern vermögen zumindest einen Teil dieser Forderungen nicht zu erfüllen; so erlaubt beispielsweise die Sicherungsmutter nach der oben erwähnten DE-OS nur eine sehr geringe Anzahl von Schraubvorgängen. Eine Sicherungsmutter, die bezüglich Klemmsicherung, Wiederholbarkeit des Schraubvorgangs und Temperaturbeständigkeit ausgezeichnete Eigenschaften besitzt, ist aus der DE-PS 26 38 560 bekannt; diese Sicherungsmutter benötigt jedoch ein zusätzliches Element, nämlich eine Federscheibe, was die Herstellung etwas verteuert. Weiterhin ist aus der DD-A-257 668 eine selbstsichernde Mutter bekannt, die mit einem radial verlaufenden Schlitz versehen ist, wobei das verbleibende Gewindeteil gegenüber dem restlichen Teil der Mutter verformbar ist und wobei der Schlitz im oberen Bereich einen kleineren oder größeren Abstand hat als im Grund und dadurch beim Verschrauben, beispielsweise mit einem Gewindebolzen, eine elastische Rückverformung eintritt.

Aufgabe der vorliegenden Erfindung ist es, eine Ganzstahl-Sicherungsmutter zu schaffen, die nur aus einem einzigen Element besteht, kostengünstig herzustellen ist und sich gut für die Anwendung in automatisierten Schraubanlagen eignet, trotzdem aber eine ausgezeichnete Sicherungsklemmung gewährleistet, eine oftmalige Wiederholung des Schraubvorgangs ohne Verschlechterung der Klemmwirkung erlaubt und auch von großen Temperaturschwankungen unbeeinflußt bleibt. Die Lösung dieser Aufgabe ergibt sich aus den des Patentanspruchs 1. Besonders zweckmäßige Verfahren zur Herstellung dieser Sicherungsmutter sind in den Patentansprüchen 8 und 9 gekennzeichnet.

Die erfindungsgemäße Sicherungsmutter erfüllt alle oben erwähnten Forderungen. So ist die Konstruktion äußerst einfach und zur Herstellung ist es lediglich erforderlich, einen Schlitz einzuschneiden und einen Preßvorgang durchzuführen, wobei diese beiden Vorgänge ohne Schwierigkeiten automatisierbar sind. Dabei kann die jeweils gewünschte Klemmkraft auf einfachste Weise bei der Herstellung der Mutter eingestellt werden, und zwar durch geeignete Bemessung der Schlitztiefe, der Schlitzbreite und/oder der Schlitzneigung. Versuche haben ergeben, daß die Sicherungsmutter nicht nur beim ersten Aufschraubvorgang eine exakt definierte Klemmkraft und damit Sicherheit gewährleistet, sondern diese exakte definierte Klemmkraft auch noch nach vielen Schraubvorgängen gegeben ist. Der Einsatz dieser Sicherungsmutter in automatisierten Aufschraubanlagen ist deshalb besonders günstig, weil die Mutter infolge ihrer Mittensymmetrie von beiden Seiten her aufgeschraubt werden kann, die ansonsten meist übliche Vorsortierung der Muttern auf richtige Lage somit wegfällt.

Auf der Zeichnung ist ein Ausführungsbeispiel der Erfindung dargestellt. Es zeigen:
- Fig. 1: die Sicherungsmutter in Draufsicht,
- Fig. 2: die Sicherungsmutter in Seitenansicht
- Fig. 3 und 4: eine zweite Ausführungsform der Sicherungsmutter.

Die Sicherungsmutter ist im Ganzen mit 10 bezeichnet. Bei 11 ist das Muttergewinde angedeutet. In die Mutter 10 ist ein Schlitz 12 eingeschnitten, und zwar von einer Außenseite der Mutter her. Der Schlitz 12 weist eine Schlitztiefe T, eine Schlitzbreite B und einen Schrägwinkel α gegenüber den Radialebenen der Mutter 10 auf. Der Schlitz 12 liegt in einer Ebene, welche-die Mittel-Radialebene der Mutter 10 in einer Linie schneidet, welche den Mutter-Mittelpunkt 10a enthält. Mit anderen Worten, die Schlitzebene geht durch diesen Mittelpunkt 10a hindurch, womit sich eine Mittelsymmetrie ergibt. Die Schlitztiefe T beträgt 45 bis 65 %, vorzugsweise 50 bis 60 % der Gesamtbreite MB der Mutter .10. Der Anstellwinkel α des Schlitzes 12 soll kleiner als 15° sein, vorzugsweise zwischen 5 und 15° bzw. zwischen 7 und 13° liegen. Bei handelsüblichen Sicherungsmuttern mittlerer Größe führen diese Werte dann dazu, daß der Schlitz 12 mehrere Gewindegänge anschneidet. Die Schlitzbreite B hängt vor allem vom gewünschten Klemmdrehmoment und von der Gewindesteigung ab. Die Neigungsrichtung des Schlitzes 12 schließlich, also in oder gegen Steigungsrichtung des Gewindes, spielt keine wesentliche Rolle, jedoch kann es in manchen Fallen einfacher sein, Schnittgrate zu vermeiden, wenn die Schlitzanstellung in Steigungsrichtung verläuft.

Zum erleichterten Verständnis der Funktionsweise dieser Sicherungsmutter soll zunächst deren Herstellungsverfahren erläutert werden.

Nach einer ersten Verfahrenseise wird zunächst in den noch gewindelosen Mutter-Rohling der Schlitz 12 und dann erst das Gewinde 11 eingeschnitten, worauf die Mutter 10 in einer Presse zusammengedrückt wird, derart, daß die beiden Schlitzflächen unter Druck aufeinander liegen, der Schlitz also geschlossen ist. Damit aber ergibt sich an den Gewindegang-Durchschneidungen ein gewisser Versatz. Wird nun ein Gewindebolzen in die Mutter 10 eingeschraubt, dann muß das Bolzengewinde diesen Gangversatz des Muttergewindes überwinden, was dazu führt, daß sich der Schlitz 12 - zumindest teilweise - wieder öffnet. Die Rückstellkraft des Muttermaterials, welche in Richtung einer Schließung des Schlitzes 12 wirkt, hält den Bolzen klemmend fest, sichert diesen also in der eingeschraubten Position. Der Bolzen kann aber wieder herausgeschraubt werden, einfach dadurch, daß ein Drehmoment eingesetzt wird, welches die erwähnte Rückstellkraft übersteigt.

Der erwähnte Gewindegangversatz kann aber auch dadurch erreicht werden, daß zunächst bin den gewindelosen Mutterrohling der Schlitz 12 eingeschnitten, dieser dann durch einen Keil aufgeweitet und daraufhin das Gewinde 11 eingeschnitten wird. Entfernt man nun den Keil, so geht der Schlitz 12 in seine ursprüngliche Breite zurück, mit der Folge eines Gewindegangversatzes. Diese Herstellungsweise ist etwas aufwendiger als die erstgenannte, bringt jedoch den - manchmal erwünschten - Vorteil, daß die Mutter im unbelasteten Zustand (vor dem Einschrauben eines Gewindebolzens) ihre Normaldimension hat. Selbstverständlich gelten die beschriebenen Vorgänge nicht nur beim Einschrauben eines Gewindebolzens in die Mutter sondern auch beim Aufschrauben der Mutter auf einen Gewindebolzen.

Die Erfindung kann zahlreiche Abwandlungen erfahren. So ist es beispielsweise bei der Herstellung auch möglich, zuerst das Gewinde und dann erst den Schlitz einzuschneiden, worauf dann die Mutter verdrückt wird. Die wesentlichen Vorteile der erfindungsgemäßen Sicherungsmutter sind jedenfalls darin zu sehen, daß keine zusätzlichen Elemente, wie etwa Federscheiben, erforderlich sind, daß eine einwandfreie Sicherungsklemmung mit vielfacher Wiederholungsmöglichkeit erreicht wird und daß sich die Sicherungsmutter besonders gut für eine automatische Zuführung bei ihrer Anwendung eignet, weil es keine Rolle spielt, von welcher ihrer beiden Seiten her sie aufgeschraubt wird.

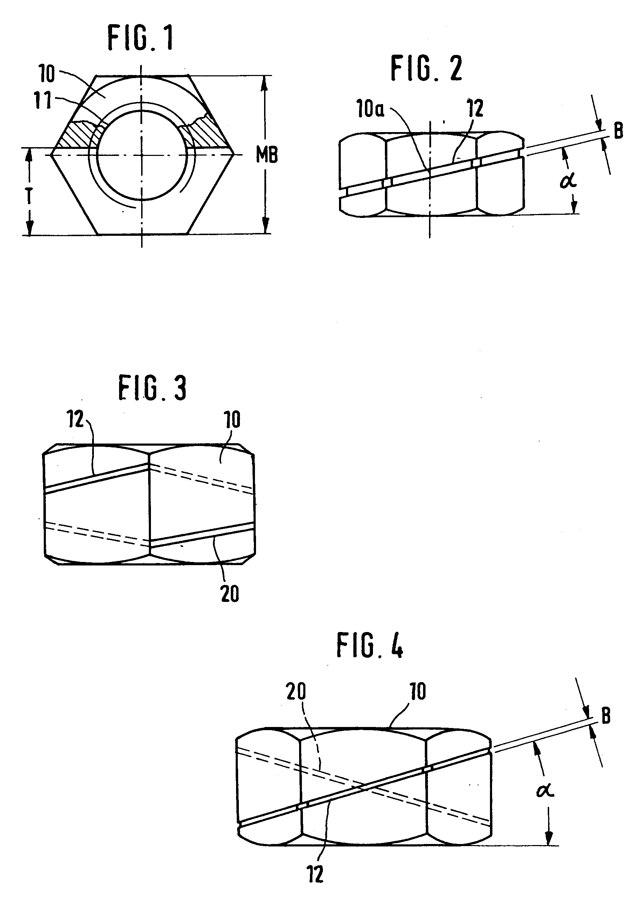

Die Figuren 3 und 4, die gegenüber um 60° verdreht sind, zeigen eine zweite Ausführungsform der Erfindung, bei welcher zwei Schlitze vorgesehen sind, nämlich ein Schlitz 12 und ein Schlitz 20. Dabei ist der Schlitz 12 mit dem Schlitz 12 von Fig. 1 und 2 identisch. Der Schlitz 20 ist von der anderen Außenseite der Mutter 10 her in diese eingeschnitten und weist dieselbe Anstellung gegenüber der Horizontalen auf, derart, daß sich eine völlige Symmetrie ergibt, wie dies aus den Fig. 3 und 4 ersichtlich ist. Auch bei dieser Ausführungsform spielt es aufgrund der erwähnten Symmetrie keine Rolle, von welcher ihrer beiden Seiten her die Mutter aufgeschraubt wird. Durch die Anordnung von zwei Schlitzen wird die Haltekraft vergleichmäßigt.

## Patentansprüche

1. Ganzmetall-Sicherungsmutter mit einem Schlitz zur Herbeiführung der Sicherungs-Klemmwirkung, wobei die Sicherungsmutter im Bereich des Schlitzes elastisch Federnd ist, bei welcher der Schlitz (12) in einer Ebene liegt, welche die Mittel-Radialebene der Mutter (10) unter einem Anstellwinkel (α) zwischen 5 und 15° schneidet, wobei die Ebenen-Schnittlinie den Mutter-Mittelpunkt (10a) enthält, bei welcher der Schlitz (12) von einer Außenseite der Mutter (10) her in diese eingeschnitten ist, wobei die Schlitztiefe (T) zwischen 45 und 65 % der Mutter-Gesamtbreite (MB) beträgt, und bei welcher das Muttergewinde (11) an den stellen der Schlizdurchbrechungen einen Gangversatz aufweist.

2. Ganzstahl-Sicherungsmutter nach Anspruch 1, dadurch gekennzeichnet, daß die beiden Begrenzungsflächen des Schlitzes (12) bei unbelasteter Mutter (10) unter Druck aufeinander liegen.

3. Ganzstahl-Sicherungsmutter nach Anspruch 1, dadurch gekennzeichnet, daß die beiden Begrenzungsflächen des Schlitzes (12) bei unbelasteter Mutter zueinander parallel verlaufen.

4. Ganzstahl-Sicherungsmutter nach einem der Ansprüche 1 bis 3, dadurch gekennzeichnet, daß der Anstellwinkel (α) zwischen 7 und 13° liegt.

5. Ganzstahl-Sicherungsmutter nach einem der Ansprüche 1 bis 4, dadurch gekennzeichnet, daß die Schlitztiefe (T) zwischen 50 und 60 % der Mutter-Gesamtbreite (MB) beträgt.

6. Ganzstahl-Sicherungsmutter nach einem der Ansprüche 1 bis 5, dadurch gekennzeichnet, daß die Schlitzneigung in Steigungsrichtung des Muttergewindes (11) liegt.

7. Verfahren zur Herstellung einer Ganzstahl-Sicherungsmutter nach den Ansprüchen 1 und 2, dadurch gekennzeichnet, daß in den gewindelosen Mutter-Rohling zuerst der Schlitz und dann erst das Gewinde eingeschnitten wird, wonach die Mutter zusammengedrückt wird bis die beiden Begranzungsflächen des Schlitzes unter Druck aufeinanderliegen.

8. Verfahren zur Herstellung einer Ganzstahl-Sicherungsmutter nach den Ansprüchen 1 und 3, dadurch gekennzeichnet, daß in den gewindelosen Mutter-Rohling zuerst der Schlitz eingeschnitten und der Schlitz dann durch einen Keil aufgeweitet wird, worauf das Mutter-Gewinde eingeschnitten und der Keil wieder entfernt wird.

9. Ganzstahl-Sicherungsmutter nach einem der Ansprüche 1 bis 6, dadurch gekennzeichnet, daß ein zweiter Schlitz (20) vorgesehen ist, der bezüglich Anstellwinkel, Ebenen-Schnittlinie und Schlitztiefe dem ersten Schlitz (12) entspricht, jedoch von der gegenüberliegenden Außenseite der Mutter (10) her in diese eingeschnitten ist.

## Claims

1. An all-metal locknut having a slot to produce the clamping action for locking, the locknut being elastically resilient in the region of the slot, the slot (12) lying in a plane which intersects the central radial plane or the nut (10) at an angle of incidence (α) of between 5 and 15°, the line of intersection of the planes containing the nut centre (10a), the slot (12) being cut in the nut (10) from one of the outsides of the nut (10), the slot depth (T) being between 45 and 65% of the total nut width (MB), and the nut thread (11) having a phase shift at the slot breaks.

2. An all-steel locknut according to claim 1, characterised in that the two boundary surfaces of the slot (12) bear on one another under pressure when the nut (10) is in the non-loaded condition.

3. An all-steel locknut according to claim 1, characterised in that the two boundary surfaces of the slot (12) extend in parallel relationship when the nut is in the non-loaded condition.

4. An all-steel locknut according to any one of claims 1 to 3, characterised in that the angle of incidence (α) is between 7° and 13°.

5. An all-steel locknut according to any one of claims 1 to 4, characterised in that the slot depth (T) is between 50 and 60% of the total nut width (MB).

6. An all-steel locknut according to any one of claims 1 to 5, characterised in that the slot inclination lies in the direction of the patch of the screwthread (11) of the nut.

7. A method of making an all-steel locknut according to claims 1 and 2, characterised in that the slot is first cut in the nut blank devoid of screwthreading and the screwthreading is then cut, whereupon the nut is compressed until the two boundary surfaces of the slot bear on one another under pressure.

8. A method of making an all-steel locknut according to claims 1 and 3, characterised in that the slot is first cut in the nut blank devoid of screwthreading and the slot is then widened by means of a wedge, whereupon the nut screwthread is cut and the wedge then removed.

9. An all-steel locknut according to any one of claims 1 to 6, characterised in that a second slot (20) is provided which corresponds to the first slot (12) in respect of angle of incidence, line of intersection of the planes and slot depth, but which is cut in the nut (10) from the opposite outside thereof.

## Revendications

1. Ecrou indesserrable entièrement métallique présentant une fente qui sert à établir l'effet de blocage de sûreté, l'écrou indesserrable étant élastique dans la région de la fente, dans lequel la fente (12) se trouve dans un plan qui coupe le plan radial médian de l'écrou 10 avec un angle d'inclinaison (α) compris entre 5 et 15°, la ligne de coupe du plan contenant le centre (10a) de l'écrou, dans lequel la fente (12) est taillée dans l'écrou à partir d'un côté extérieur de l'écrou (10), la profondeur (T) de la fente représentant entre 45 et 65 % de la largeur totale (MB) de l'écrou, dans lequel le filetage (11) de l'écrou présente un décalage de filets aux endroits des débouchés de la fente.

2. Ecrou indesserrable entièrement en acier selon la revendication 1, caractérisé en ce que les deux surfaces limites de la fente (12) sont appliquées l'une sur l'autre sous pression lorsque l'écrou (10) est détendu.

3. Ecrou indesserrable entièrement en acier selon la revendication 1, caractérisé en ce que les deux surfaces limites de la fente (12) s'étendent parallèlement entre elles lorsque l'écrou est détendu.

4. Ecrou indesserrable entièrement en acier selon une des revendications 1 à 3, caractérisé en ce que l'angle d'inclinaison (α) est compris entre 7 et 13°.

5. Ecrou indesserrable entièrement en acier selon une des revendications 1 à 4, caractérisé en ce que la profondeur (T) de la fente représente entre 50 et 60 % de la largeur totale (MB) de l'écrou.

6. Ecrou indesserrable entièrement en acier selon une des revendications 1 à 5, caractérisé en ce que l'inclinaison de la fente se trouve dans la direction du filetage (11) de l'écrou.

7. Procédé de fabrication d'un écrou indesserrable entièrement en acier, selon les revendications 1 et 2, caractérisé en ce que la fente est tout d'abord taillée dans l'ébauche d'écrou non fileté et que le filetage est taillé seulement ensuite, après quoi l'écrou est comprimé jusqu'à ce que les deux surfaces limites de la fente soient appliquées l'une sur l'autre sous pression.

8. Procédé de fabrication d'un écrou indesserrable entièrement en acier selon les revendications 1 et 3, caractérisé en ce que la fente est tout d'abord taillée dans l'ébauche d'écrou non fileté et la fente est ensuite élargie au moyen d'un coin, après quoi le filetage de l'écrou est taillé et le coin est ensuite enlevé.

9. Ecrou indesserrable entièrement en acier selon une des revendications 1 à 6, caractérisé en ce qu'il est prévu une deuxième fente (20) qui correspond à la première fente (12) en ce qui concerne l'angle d'inclinaison, et la ligne de coupe du plan et la profondeur de la fente, mais est taillée dans l'écrou en partant du côté extérieur opposé de l'écrou (10).
